**Europäisches Patentamt**

**European Patent Office**

**Office européen des brevets**

(19)

(11) Numéro de publication: **0 124 456**

**B1**

(12) # FASCICULE DE BREVET EUROPÉEN

(45) Date de publication du fascicule du brevet:
**02.09.87**

(21) Numéro de dépôt: **84420074.1**

(22) Date de dépôt: **19.04.84**

(51) Int. Cl.⁴: **A 01 G 9/22**

(54) **Dispositif pour la mise en place, le retrait ou l'établissement d'au moins un écran souple.**

(30) Priorité: **25.04.83 FR 8306983**

(43) Date de publication de la demande:
**07.11.84 Bulletin 84/45**

(45) Mention de la délivrance du brevet:
**02.09.87 Bulletin 87/36**

(84) Etats contractants désignés:
**BE CH DE GB IT LI NL**

(56) Documents cité:
**DE-A-3 013 717**
**DE-B-1 215 429**
**FR-A-1 586 497**

(73) Titulaire: **RHONE- POULENC FILMS, 25, quai Paul Doumer, F-92408 Courbevoie (FR)**

(72) Inventeur: **Grosjean, Pierre, 14, rue Alexandre Berthier, F-69110 Sainte- Foy- Les- Lyon (FR)**
Inventeur: **Janin, Bernard, 74, cours Lafayette, F-69003 Lyon (FR)**

(74) Mandataire: **Rioufrays, Roger, RHONE- POULENC INTERSERVICES Service Brevets Chimie Centre de Recherches de Saint- Fons B.P. 62, F-69192 Saint- Fons Cédex (FR)**

EP 0 124 456 B1

## Description

La présente invention a pour objet un dispositif pour l'établissement d'un ou plusieurs films ou feuilles souples devant être mis en place de façon temporaire pour former un écran.

Le domaine technique concerné vise toutes les applications où il convient d'établir un écran assumant une fonction de barrière thermique, de protection, d'occultation, entre l'extérieur ou un milieu environnant et un espace restreint devant être isolé.

Dans un tel domaine technique, un écran souple doit être considéré comme formant, représentant ou constituant un élément léger, pliable, à base de feuilles, films, panneaux ou nappes de toute matières appropriées.

Pour assurer la mise en place de tels écrans, la technique antérieure offre des solutions nombreuses et variées.

Le plus généralement, il s'agit de monter un tel écran par l'intermédiaire d'organes de support et de glissement ou de roulement approprié sur des guides parallèles. Certaines des organes de glissement sont fixés à un ou plusieurs câbles sans fin entraînés en défilement dans un sens ou dans l'autre par un arbre tournant pouvant être disposé, le plus fréquemment, perpendiculairement à l'axe des guides.

Cette technique, illustrée notamment par les demandes de brevets français FR-A 2 282 027, FR-A 2 212 091, FR-A- 2 382 182, FR-A- 2 247 593, FR-A- 2 408 999, peut être considérée comme ne donnant pas satisfaction pour de nombreuses raisons.

Un premier inconvénient à mettre au compte de ces solutions connues tient à la présence de moyens de support, de glissement et d'entraînement en déplacement, sinon compliqués, du moins importants et longs à mettre en place. De tels moyens exigent, par ailleurs, des réglages particulièrement précis et délicats pour rendre possible la mise en place, le retrait ou le déploiement d'un écran de grande surface ou, plus particulièrement, devant être développé sur une grande longueur.

Un second inconvénient à mentionner réside dans le fait que ces dispositifs ne permettent l'établissement d'un écran que selon un plan et sont ainsi totalement inadaptés aux applications dans lesquelles il convient d'établir une barrière en forme suivant, au plus près notamment, l'enveloppe fictive d'un volume à délimiter par rapport à l'extérieur ou, encore, la paroi délimitative d'une enceinte.

Ces deux inconvénients sont particulièrement pénalisants dans le cas d'application à une serre-tunnel selon laquelle il est recherché de développer au moins une barrière à fonction d'isolation thermique, de manière à protéger les cultures des variations de température du milieu environnant.

En effet, dans une telle application, la mise en place d'un écran plan ne peut être envisagé que parallèlement à l'axe longitudinal, selon un plan surbaissé par rapport au faîte. Une telle solution n'est, manifestement, pas à même de régler le problème posé puisque la serre-tunnel est alors dépourvue de barrières thermiques le long de ses côtés longitudinaux.

On a cherché à apporter une solution au problème ainsi posé.

Une solution a été proposée par la demande française FR-A- 2 484 194, selon laquelle il est prévu d'accrocher le bord d'un écran à la base et le long de l'un des côtés longitudinaux d'une armature d'une serre-tunnel et d'enrouler cet écran sur un rouleau ou mandrin coopérant, par des pignons extrêmes, avec des crémaillères formées par les éléments d'armature de la serre perpendiculaires à l'axe longitudinal.

Un système de câbles, montés sur des poulies, roues ou autres organes de renvoi portés par l'armature, permet, par l'intermédiaire d'un organe moteur réversible, d'entraîner le mandrin en rotation, de manière à produire le déroulement ou l'enroulement de l'écran.

Une telle solution apparaît immédiatement délicate mettre en oeuvre, compte tenu de la nécessité de faire intervenir des éléments d'armature spéciaux pour la coopération avec le tambour et un mécanisme d'entraînement encombrant devant être rapporté selon une mise en place précise sur cette armature.

Par ailleurs, une telle solution est pratiquement impossible à mettre en place effectivement dans le cas d'application visé. En effet, on sait que l'enroulement ou le déroulement d'une nappe quelconque ne peut être pratiquement effectué de façon certaine et répétitive, régulièrement et correctement, que lorsque le mandrin ne dépasse pas une longueur donnée, au plus environ dix mètres. Au-delà, en effet, les variations de tension et de dilatation du film ou de la nappe rendent l'enroulement ou le déroulement irrégulier, provoquant une détérioration de la nappe ou du film à brève échéance.

L'application aux serres-tunnels d'un tel dispositif est donc pratiquement exclue.

Un inconvénient supplémentaire devant être signalé tient au fait que, selon la solution proposée, l'écran doit être déployé sur la surface extérieure de l'armature. Un tel écren est donc obligatoirement soumis aux agressions du milieu extérieur et connaît, en conséquence, un vieillissement prématuré rendant, très rapidement, aléatoire un déploiement ou un retrait.

Une seconde solution a été proposée par la demande française FR-A- 2 431 827. Selon cette demande, il est prévu de constituer un écran pour une serre-tunnel en faisant intervenir deux panneaux susceptibles d'être déployés, à partir de la base des bords longitudinaux de l'armature, au moyen de deux tambours ou mandrins d'enroulement fixés dans la partie médiane de chaque panneau. Les mandrins d'enroulement sont disposés parallèlement à l'axe longitudinal et mûs en rotation par un système d'entraînement à câbles et à poulies de renvoi porté par la face intérieure de l'armature. Les bords extrêmes libres des panneaux sont maintenus par des éléments tubuleires reliés par des câbles de traction à un arbre d'enroulement faisent partie du système d'entraînement des mandrins.

Une telle solution technique apparaît particulièrement complexe, encombrante et délicate de mise en place, de réglage et de fonctionnement.

Par ailleurs, la constitution d'un écran au moyen de deux panneaux pose le problème de l'établissement d'une jonction parfaite entre les bords mobiles, de façon à éviter impérativement, lorsque l'écran est totalement déployé, la présence d'une discontinuité constituant une cheminée faisant communiquer le milieu extérieur avec le volume interne qu'il s'agit justement d'isoler.

En outre, puisque le tambour ou le mandrin de chaque demi-panneau enroule simultanement la partie mobile et la partie fixe de chaque panneau, il en résulte une capacité de déploiement réduite de moitié, avec l'impossibilité de procéder à un retrait total d'un tel écran.

La solution proposée par cette demande française consiste, d'ailleurs, plus à offrir une possibilité d'ouverture de la partie supérieure d'une serre-tunnel qu'à proposer une solution technique adaptable aux écrans devant être entièrement déployés, en partie établis ou totalement rétractés en fonction des conditions d'application.

Au surplus, une telle solution technique fait encore intervenir un tambour ou mandrin d'enroulement s'étendant parallèlement à l'axe longitudinal d'une serre-tunnel. Compte tenu des longueurs pratiques de ces dernières, une telle solution est donc difficile à mettre en oeuvre, en raison des problèmes d'enroulement ou déroulement régulier mentionnés précédemment.

Dans la demande allemande DE 3 013 717, on a proposé un dispositif de mise en place d'un écran, constitué par des galets se déplaçant, sous l'action d'un moteur fixe, dans un profilé creux. Les galets, auxquels l'écran est relié, sont mis en mouvement par l'intermédiaire d'un jeu de poulies, galets de relais et de câbles. Un tel dippositif s'avère compliqué et difficile à mettre en place.

La demande de brevet allemand DE 1 215 429 concerne un dispositif pour mettre en place un écran d'ombrage, selon lequel un arbre portant un rouleau enrouleur-érouleur d'un écran est déplacé au moyen d'un moteur, porté par l'arbre, qui entraîne un pignon denté engrainant avec une crémaillère horizontale. Un tel système ne se prête pas à la mise en place d'écrans de grandes dimensions. Son utilisation implique en pareil cas la multiplication des ensembles rouleau enrouleur-dérouleur/ /crémaillère.

L'objet de l'invention est de proposer un nouveau dispositif à même de répondre au problème posé en supprimant totalement les inconvénients des solutions actuellement offertes par l'art antérieur.

L'un des buts de l'objet de l'invention est de proposer un nouveau dispositif particulièrement simple, pouvant être implanté rapidement dans tous les domaines d'application, en ne faisant intervenir, dans la majorité des cas, que des éléments constitutifs du commerce.

Un autre objet de l'invention est de proposer un nouveau dispositif particulièrement fiable et robuste, ne nécessitant pas de réglage long et délicat.

Un objet supplémentaire de l'invention est de proposer um nouveau dispositif pouvant être mis en place pour l'établissement d'un écran en forme, par opposition aux écrans plans, quelle que soit la surface géométrique devant être occupée par un tel écran.

Un autre objet encore de l'invention est de proposer un dispositif permettant la mise en place, partielle ou totale d'un écran sur des longueurs particulièrement importantes.

Un autre objet supplémentaire de l'invention est de proposer un dispositif permettant, le cas échéant, l'établissement de deux écrans au moins en partie superposés, assumant par exemple des fonctions différentes mais complémentaires.

Pour atteindre les buts ci-dessus la présente invention propose un dispositif pour la mise en place, le retrait ou le déplacement d'au moins un écran souple (E,20) du type dans lequel l'un des bords dudit écran est accroché à des points fixes (5) et le bord opposé est tiré au moyen d'au moins un moteur, selon une direction générale donnée par une pluralité d'éléments-porteurs (4) de l'écran sous forme de rails à sectein profilée, définissant chacun la directrice locale de la surface géométrique réglée susceptible d'être occupée par l'écran, caractérisé en ce que au moins deux éléments-porteurs (4) formant chacun au moins un rail à section profilée, régulière, constante constituent chacun un organe support, de coopération et de guidage en déplacement selon la directrice qu'ils définissent à chacun des chariots-moteurs (6) auxquels sont fixés un des bords d'un même écran (E,20), lesquels chariots-moteurs (6) montés à raison d'un par rail de chacun des dits éléments-porteurs (4) sont à fonctionnement reversible, comportent chacun un organe de transmission du mouvement coopérant avec le rail qui le porte et des moyens d'immobilisation sur ce rail et sont indépendants les une des autres dans leur fonctionnement, les éléments-porteurs (4) servant en outre de support à le ou les écrans (E,20).

Diverses autres caractéristiques ressortent de la description faite ci-dessous en référence aux dessins annexés qui montrent, à titre d'exemples non limitatifs, des formes de réalisation de l'objet de l'invention.

La fig. 1 est une perspective schématique montrant un exemple d'application du dispositif de l'invention.

La fig. 2 est une vue schématique transversale, prise à plus grande échelle, selon le plan II-II de la fig. 1.

La fig. 3 est une coupe transversale, en partie arrachée, prise à plus grande échelle selon la ligne III-III de la fig. 2.

La fig. 4 est une coupe prise, à échelle différente, selon la ligne IV-IV de la fig. 3.

La fig. 5 est une vue éclatée du chariot moteur selon la fig. 3.

Les fig. 6 et 7 sont des élévations de deux formes de réalisation de l'un des éléments constitutifs de l'invention.

La fig. 8 est une perspective montrant, à plus petite échelle, un détail de construction dans un exemple d'application.

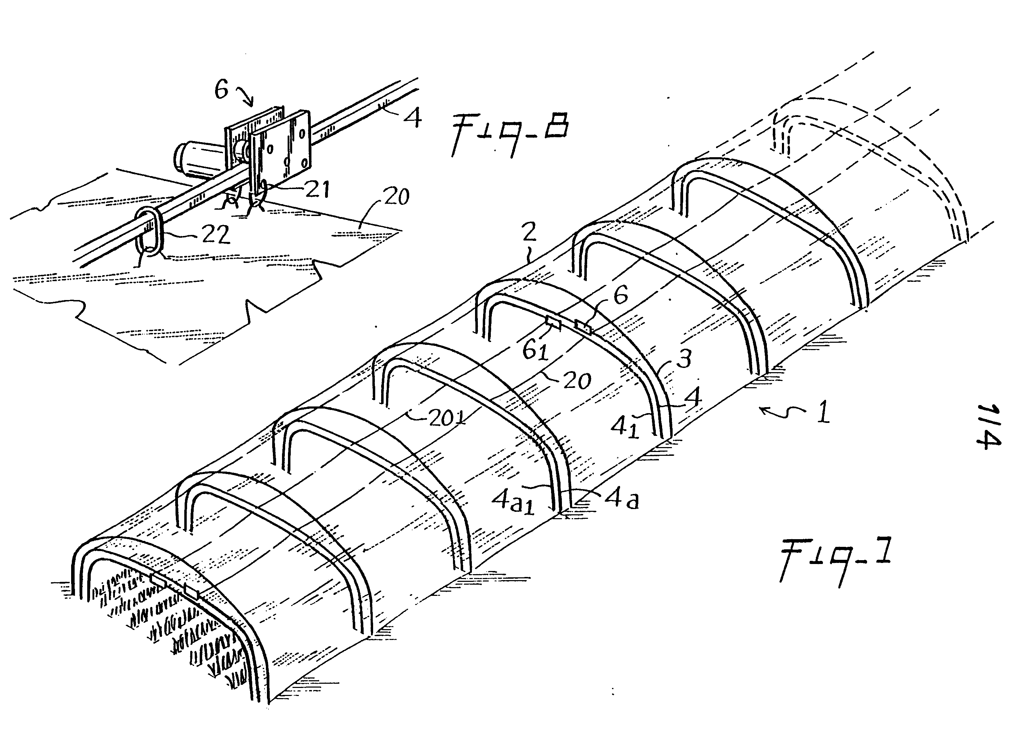

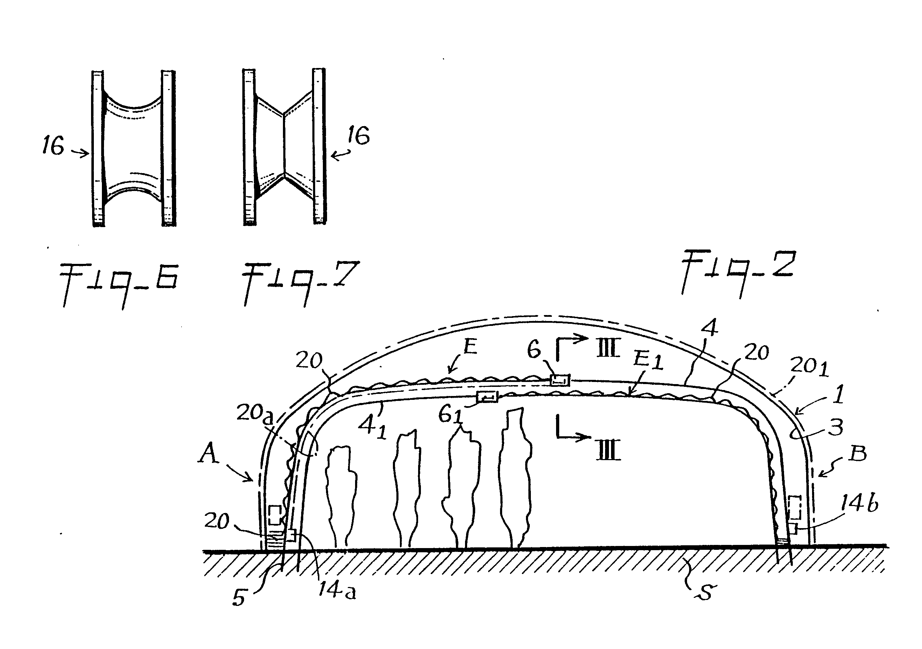

Les fig. 1 et 2 montrent un exemple d'application de l'objet de l'invention à une serre-tunnel 1 constituée de façon connue par une armature supportant une paroi 2 généralement formée par une nappe ou un film de matière plastique. L'armature de support est, de façon commune, constituée par des arceaux 3 qui peuvent être conformés en arc plein cintre, outrepassé ou en anse de panier. De façon connue, de tels arceaux s'étendent transversalement à l'axe longitudinal de la serre-tunnel, de manière à délimiter un volume dont l'emprise au sol est une bande rectangulaire.

L'exemple d'application ci-dessus n'est donné que pour illustrer l'invention et les avantages qui en découlent par rapport à l'art antérieur connu. Il doit ainsi être considéré que l'objet de l'invention peut être mis en oeuvre dans d'autres applications.

Des plantes P, telles que schématisées à la fig. 2 et cultivées dans la serre 1, doivent faire l'objet, ainsi que cela est connu, d'une protection, par exemple contre les variations de température du milieu extérieur, protection qui ne peut être assurée par la paroi 2. Par exemple, il importe de pouvoir maintenir dans le volume de la serre 1 une température la plus régulière possible et, à cette fin, il convient de pouvoir développer un écran constituant une barrière thermique s'opposant aux déperditions. Dans le cas d'application à une serre-tunnel le problème est de pouvoir développer un tel écran dans le volume délimité, de façon à envelopper les cultures pour éviter une déperdition le long de l'interface entre ce volume et le milieu environnant.

L'objet de l'invention répond à une telle exigence en faisant intervenir les moyens suivants.

Les fig. 1 et 2 font apparaître que l'invention consiste à mettre en oeuvre des éléments porteurs 4 s'établissant dans le volume de la serre parallèement entre eux et perpendiculairement à l'axe longitudinal de la serre en étant placés, par exemple, au droit de certains des arceaux 3. Les éléments porteurs 4 s'inscrivent dans un plan et sont conformés de manière à définir dans l'espace la surface géométrique devant être occupée par l'écran pour entourer la culture en s'élevant à partir du sol S. A cet effet, donc, toute conformation peut être retenue et celle illustrée aux fig. 1 et 2 n'est donnée qu'à titre d'exemple.

Les éléments porteurs 4 sont constitués dans le cas présent par des profilés à section constante régulière, du type de ceux disponibles dans le commerce pour assumer une fonction analogue, voire une fonction de constitution principale d'arceaux 3 d'armatures porteuses. De façon habituelle, les éléments porteurs peuvent être constitués par des barres en toute matière appropriée, par exemple à section droite transversale rectangulaire ou carrée.

Chaque élément porteur est implanté dans le sol S par enfoncement de ses parties terminales 5, éventuellement garnies d'embouts protecteurs amovibles en forme de fiches épaulées.

Les éléments porteurs 4 représentent donc des pièces disponibles, généralement dans le commerce, le plus souvent, également, préconformées et pouvant être implantées dans une serre rapidement, sans travaux particuliers, même de façon temporaire, étant donné qu'il n'existe pratiquement aucune liaison importante de structure entre eux et l'armature de la serre 1.

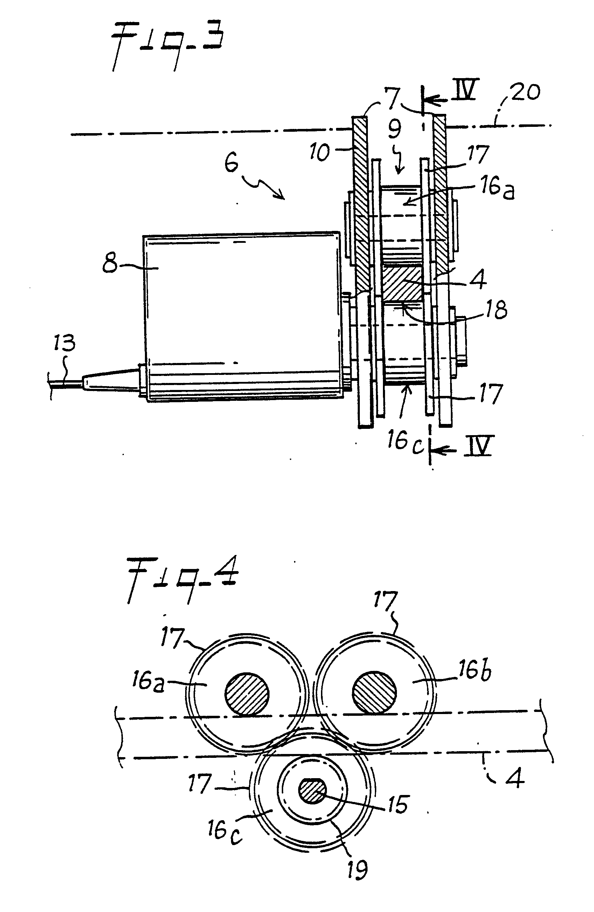

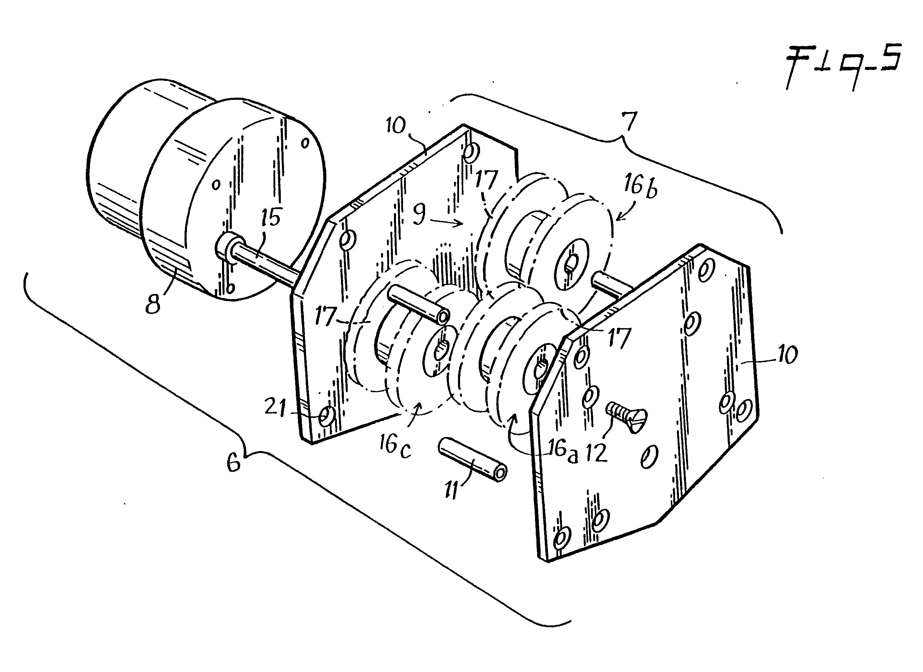

L'objet de l'invention fait intervenir d'autres moyens techniques constitués par des chariots moteurs 6 destinés à coopérer avec des éléments porteurs 4 qui forment pour ces chariots des rails de support, de coopération et de guidage en déplacement. Ces rails définissent aussi par la forme qui leur est conférée la directrice de la surface géométrique réglée susceptible d'être occupée par l'écran à établir. Chaque chariot moteur comprend, comme cela ressort des fig. 3 à 5, une structure porteuse 7, un organe moteur 8 et un ensemble de transmission 9 destiné à coopérer avec le rail 4. La structure porteuse 7 est, par exemple, constituée par un ou deux flasques 10 maintenus parallèlement entre eux par des entretoises 11 et des vis 12. L'un des flasques 10 supporte, extérieurement, un motoréducteur électrique représentant l'organe moteur 8 et dont l'alimentation est assurée par un câble 13, de façon indépendante de celle des moteurs des autres chariots faisant partie du même dispositif de l'invention.

L'alimentation du groupe motoréducteur 8 est placée sous la dépendance de contacteurs de fin de course 14a-14b coopérant avec une installation de programmation ne faisant pas partie directement de l'invention.

L'arbre de sortie 15 du moteur 8 traverse le flasque 10 correspondant pour commander l'ensemble de transmission 9 porté par les flasques 10. L'ensemble 9 est constitué par un jeu d'au moins trois galets 16a, 16b, et 16c disposés en triangle dans un même plan et dont l'un au moins est menant. Dans l'exemple de construction illustré par les dessins, le galet 16c est menant et se trouve monté en relation de rotation directe ou indirecte avec l'arbre moteur 15. Le galet menant 16c est, de préférence, placé en relation d'entraînement avec les deux autres galets 16a et 16b menés, de façon que ces derniers soient animés d'une rotation de même sens contrarotative par rapport à celle du galet menant 16c. Les galets 16a et 16b peuvent être ainsi menés par un train d'engrenages ou encore, de préférence, il peut être prévu de faire comporter à chaque galet et dans le plan des faces transversales, deux rebords périphériques 17 comportant chacun une denture extérieure. Les galets sont portés par la structure 7, de manière que les dentures des rebords périphériques 17 du galet menant 16c engrènent simultanément avec les dentures complémentaires des deux galets menés 16a et 16b qui n'ont toutefois entre eux aucune liaison d'engrènement, comme cela ressort de la fig. 4.

Les galets 16 sont, en outre, montés sur la structure porteuse 7, de manière que les deux galets menés soient alignés. Ces galets délimitent ainsi, par leur périphérie et avec celle du galet menant 16c, un guichet ou une section de passage 18 offrant, selon un plan droit perpendiculaire au plan commun des galets, une section complémentaire et au plus égale à celle d'un rail porteur 4. Dans l'exemple illustré par la fig. 3, le rail 4 est de section droite transversale carrée et, par suite, les périphéries des galets 16 sont de forme cylindrique.

Les fig. 6 et 7 montrent deux autres exemples possibles de réalisation de la périphérie des galets 16, de façon à délimiter, par la disposition commune qui leur est conférée, une section de passage complémentaire à la section droite transversale du rail 4.

L'un au moins des galets 16 et, de préférence, le galet menant 16c, comporte une périphérie possédant un coefficient de friction élevé par rapport aux rails 4. Il peut s'agir d'une garniture 19 en une matière déformable et, dans un tel cas, il est prévu de disposer les différents galets, de manière que le guichet 18 présente, dans le plan commun aux galets, une dimension légèrement inférieure à celle correspondante du rail 4. Il peut s'agir, également, d'un molettage ou analogue.

De façon préférée, la périphérie de tous les galets est réalisée, adaptée, construite ou prévue pour présenter un tel coefficient de friction élevé.

Ainsi, l'engagement d'un rail 4 dans le guichet 18 fait intervenir une contrainte exercée sur ce rail par l'un au moins des galets. Il en résulte dans un état statique de l'ensemble de transmission, une immobilisation par effet de friction et freinage du chariot moteur sur le rail 4 le portant.

L'examen des fig. 3 et 4 permet de constater que la conformation particulière des galets comportant les rebords 17 permet de faire assumer à ces derniers et pour l'ensemble des galets une fonction d'emboîtement du rail 4 qui est ainsi entouré sur toute sa périphérie, quelle qu'elle soit, comme cela ressort de la comparaison des fig. 3, 6 et 7.

Il en résulte un maintien efficace de l'ensemble de transmission sur le rail 4 combattant la tendance au basculement résultant de la disposition en porte-à-faux du moteur 8.

La fig. 4 montre que le jeu de trois galets 16 est monté sur l'ensemble 7, de manière à faire coopérer l'une des faces du rail avec les deux galets menés 16a et 16b et une autre face opposée avec le galet menant 16c. Le meilleur résultat est atteint lorsque ces faces correspondent à celles extérieure et intérieure d'un rail 4 en forme d'arceau. Il apparaît indifférent que la coopération des galets 16a et 16b soit prévue sélectivement avec la face extérieure ou avec la face intérieure.

La constitution d'un dispositif conforme à l'invention s'effectue donc en choisissant le nombre d'éléments porteurs-rails 4 nécessaires en fonction de la portée et en adaptant sur chacun d'eux un chariot moteur 6, de façon à réaliser un montage comme illustré par la fig. 3.

Une feuille, une nappe ou un film 20, en toute matière appropriée légère, repliable, souple et possédant la longueur de la surface géométrique devant être établie à l'intérieur de serre 1, est stocké en replis successifs, comme illustré dans la position A de la fig. 2. Le bord longitudinal inférieur de cette nappe 20 est retenu à des moyens d'immobilisation qui peuvent, par exemple, être constitués par les pieds correspondants des rails ou éléments porteurs 4. Le bord longitudinal supérieur de la nappe 20 est accroché aux différents chariots moteurs 6, par exemple, au moyen d'oeillets, d'anneaux, de crochets, de mousquetons, etc..., engagés dans des trous 21 prévus à cet effet dans les flasques 10.

La fig. 2 montre en traits mixtes que les chariots occupent sur les différents rails 4 une position en relation avec les contacteurs 14a, la nappe 20 étant stockée à l'état replié entre les rails 4 et l'armature de la serre-tunnel. L'écran est ainsi totalement replié et aucune barrière n'est interposée, dans le volume utile de la serre, entre la paroi 2 et les plantes en culture P.

Lorsqu'il convient d'établir l'écran protecteur, les moteurs 8 sont alimentés de manière à provoquer la rotation des galets menants 16c. L'ensemble de tramsmission 9 de chaque chariot coopère alors directement avec le rail correspondant et l'ensemble ou le jeu de galets provoque, par la rotation imposée, le déplacement du chariot moteur sur le rail 4. Les différents chariots moteurs entraînent ainsi avec eux le bord longitudinal de la nappe 20 qui est amenée à se déployer progressivement, comme cela est illustré par la fig. 2. Le déploiement s'effectue de façon régulière par l'action de traction des différents chariots moteurs qui progressent de façon indépendante les une des autres, en relation directe avec leurs propres rails porteurs.

Cette disposition présente un avantage important, car elle supprime tous les inconvénients de relation physique entre les différents points de traction. Ceci permet un déploiement certain, efficace et sans risque de blocage de la nappe 20, quelles que soient les éventuelles différences de vitesse de progression réelles des chariots moteurs ou les variations de dilatation différentielles entre certaines parties de la nappe exposées différemment à l'action d'une source de chaleur directe ou indirecte.

Le déploiement de la nappe 20 s'effectue de façon progressive, sans à coups et sans aucun risque de déchirement, puisque la nappe est supportée par les rails 4 sur lesquels elle glisse. Le déploiement complet est obtenu lorsque tous les chariots moteurs 6 ont été amenés dans la position représentée en traits mixtes en B à la fig. 2. Dans cette position, les chariots moteurs 6 coopérent avec les contacteurs $14b$ interrompant, en coopèration avec le système de programmation, l'alimentation des moteurs 8 correspondant.

La nappe 20 représente alors un écran E entièrement déployé et constituant une barrière efficace établie selon une surface géométrique dont la forme est déterminée par la conformation des rails 4. Cette surface enveloppe totalement la végétation ou les plantes P en ne laissant subsister aucune discontinuité, aucune ouverture ou aucune cheminée. L'écran développé est ainsi à même de remplir efficacement la fonction pour laquelle il est prévu.

On conçoit que l'écran peut être établi en développement partiel, en commandant manuellement l'alimentation des organes moteurs 8 des différents chariots 6.

Le retrait de l'écran E est obtenu en inversant l'alimentation des organes moteurs 8 des différents chariots 6 qui sont amenés à progresser dans le sens inverse, chacun en relation de support, de coopération et de guidage avec son rail 4 propre. La nappe 20 est ainsi progressivement repoussée avec formation de plis qui viennent s'accumuler en fin de course dans un état de stockage replié à partir du sol dans l'intervalle existant entre les rails 4 et la serre-tunnel 1.

Le montage de chaque chariot, de manière à réaliser une contrainte entre l'ensemble de transmission 9 et le rail 4 correspondant, permet d'immobiliser de façon certaine chaque chariot dans une position stable et de régler ainsi précisément le déploiement partiel de l'écran E. Ceci permet aussi de faire progresser les chariots le long de tronçons de rail 4 à pente forte, voire le long de tronçons s'établissant de façon presque verticale, comme illustré par la fig. 2. Selon le profil ou la conformation des rails 4, il peut être prévu de faire comporter à chaque ensemble de transmission 9 plus de trois galets et, par exemple, de doubler le jeu illustré par la fig. 4, de façon à disposer d'un effet de friction et d'immobilisation plus important, ainsi que d'un couple de traction plus élevé lorsqu'il convient d'entraîner en déploiement une nappe d'un poids élevé à l'unité de surface.

Selon les caractéristiques de la matière constitutive de la nappe 20, il peut être nécessaire d'assurer son maintien contre tout fléchissement important dans la portée séparant deux éléments porteurs 4. La fig. 1 montre que, selon l'invention, il est alors prévu de faire intervenir, entre deux éléments porteurs 4, des éléments intermédiaires $4a$ à fonction de support.

Dans l'exemple illustré, la nappe 20 est portée par la face extérieure des éléments 4 et/ou $4a$, au fur et à mesure de son déploiement. Il peut être prévu de placer la nappe 20 en regard de la face intériéure, comme illustré par la fig. 8 et, dans un tel cas, la nappe 20 est alors suspendue aux différents éléments 4 et/ou $4a$ par des anneaux, oeillets, mousquetons ou analogues 22.

Les fig. 1 et 2 montrent que l'un des avantages de l'invention réside dans le fait qu'il est possible de déployer, si nécessaire, deux écrans en partie au moins superposés. En effet, il suffit de disposer un deuxième jeu d'éléments porteurs $4_1$ ou $4a_1$ en ménageant, entre ces derniers et les éléments porteurs 4 et $4a$ un intervalle suffisant pour tenir compte de l'encombrement des chariots moteurs $6_1$ et de l'encombrement replié et en cours de dépliage d'une nappe $20_1$. Ainsi, il devient possible de déployer, selon deux surfaces géométriques, parallèles ou non, deux écrans à fonctions différentes complémentaires.

Bien que cela ne soit pas représenté, il peut être prévu de réaliser les éléments porteurs 4 de façon à leur faire comporter deux rails pour deux chariots 6 indépendants. Dans le cadre d'établissement de deux écrans, cette solution supprime les éléments porteurs $4_1$.

Dans l'exemple d'application ci-dessus, l'objet de l'invention présente l'avantage de ne pas occuper, dans un état rétracté ou déployé, un encombrement important limitant la surface cultivable et/ou le volume utile de la serre. Un autre avantage devant être noté tient au fait que le dispositif peut être adapté au type de culture afin de permettre l'établissement d'au moins un écran entourant au plus près les plantes ou la végétation cultivées.

L'exemple d'application illustré et décrit fait intervenir des éléments porteurs identiques. Il doit être retenu que le dispositif peut aussi être mis en oeuvre pour la mise en place d'au moins un écran sur une surface géométrique ne s'établissant pas nécessairement selon une direction générale rectiligne. De même le volume géométrique délimité par l'écran et le sol peut être globalement formé par des volumes de hauteurs, de largeurs ou de rayons différents ou, encore par exemple, se présenter sous la forme d'une surface semi-tronconique. Dans le cas où la forme de la surface impose aux chariots moteurs 6 des trajectoires de longueurs différentes, il peut être avantageux, pour réduire les risques de tension imposés à la nappe 20, de conférer aux chariots des vitesses différentes. Ceci peut être atteint en contrôlant l'alimentation des organes moteurs 8 au moyen d'un dispositif d'asserviesement réglable de tout type connu.

Il doit être considéré aussi que l'objet de l'invention peut être mis en oeuvre pour l'établissement d'un écran plan. Dans un tel cas, les rails 4 définissent une directrice sensiblement rectiligne.

La fig. 3 permet de constater que chaque chariot moteur 6 peut assurer la mise en place de deux écrans simultanément. En effet, le ou les flasques 7 peuvent être reliés à une nappe 20 supérieure mais aussi à une nappe 20a inférieure qui est maintenue en étant suspendue comme illustré par la fig. 8.

En particulier, il est possible d'envisager la mise en oeuvre des moyens de l'invention pour constituer une suele barrière protectrice. Ainsi, il est possible de mettre en oeuvre des éléments porteurs conformés spécialement pour enjamber par exemple une piscine sur laquelle un écran est déployé en cas de vent, de température relativement basse, etc...

## Revendications

1. Dispositif pour la mise en place, le retrait ou le déplacement d'au moins un écran souple (E,20) du type dans lequel l'un des bords dudit écran est accroché à des points fixes (5) et le bord opposé est tiré au moyen d'au moins un moteur, selon une direction générale donnée par une pluralité d'éléments-porteurs (4) de l'écran sous formé de rails à section profilée, définissant chacun la directrice locale de la surface géométrique réglée susceptible d'être occupée par l'écran, caractérisé en ce que au moins deux éléments-porteurs (4) formant chacun au moins un rail à section profilée, régulière, constante constituent chacun un organe support, de coopération et de guidage en déplacement selon la directrice qu'ils définissent à chacun des chariots-moteurs (6) auxquels sont fixés un des bords d'un même ecran (E,20), lesquels chariots-moteurs (6) montés à raison d'un par rail de chacun des dits éléments-porteurs (4) sont à fonctionnement reversible, comportent chacun un organe de transmission du mouvement coopérant avec le rail qui le porte et des moyens d'immobilisation sur ce rail et sont indépendants les une des autres dans leur fonctionnement, les élémemts-porteurs (4) servant en outre de support à le ou les écran(s) (E,20).

2. Dispositif selon la revendication 1, caractérisé en ce que chaque élément porteur (4) comporte deux rails de support, de coopération et de guidage de deux chariots moteurs (6) correspondant à deux écrans souples indépendants s'établissant de façon au moins en partie superposée.

3. Dispositif selon la revendication 1 ou 2, caractérisé en ce que les rails (4) sont conformés pour définir une surface géométrique en forme.

4. Dispositif selon la revendication 1, caractérisé en ce que chaque chariot moteur (6) comprend au moins un flasque (10) portant un moteur électrique (8) et un ensemble de transmission (9) composé d'un jeu d'au moins trois galets (16) disposés en triangle dans un plan, dont un au moins est menant et les deux autres contrarotatifs par rapport à de dernier et qui délimitent par leur périphérie une section de passage (18) offrant, selon un plan droit perpendiculaire à leur plan commun, une section complémentaire et au plus égale à celle d'un rail (4).

5. Dispositif selon la revendication 4, caractérisé en ce que chaque chariot comporte un jeu de galets (16) formant chacun un corps central bordé, dans le plan des faces transversales, par deux rebords périphériques (17) emboîtant en partie le rail.

6. Dispositif selon la revendication 4 ou 5, caractérisé en ce que chaque chariot (6) comporte un jeu de galets (16) comprenant au moins un galet menant (16c) placé en relation d'entraînement en rotation avec les galets menés (16a-16b) par l'intermédiaire des rebords périphériques.

7. Dispositif selon l'une des revendications 4 à 6, caractérisé en ce que les galets (16) comportent une périphérie possédant un coefficient de friction élevé par rapport au rail.

8. Dispositif selon l'une des revendications 4 à 7, caractérisé en ce que l'un au moins des galets (16) comporte sur sa périphérie une garniture (19) en matière déformable.

9. Dispositif selon la revendication 1, caractérisé en ce que qu'il comprend des éléments intermédiaires (4a) prévus en alignement entre les éléments porteurs pour supporter l'écran mis en place ou déplacé.

10. Application du dispositif selon l'une des revendications 1 à 9, au déploiement et à la rétraction d'au moins un écran à l'intérieur d'une serre-tunnel.

## Patentansprüche

1. Vorrichtung zum Instellungbringen, Zurückziehen oder Verstellen mindestens einer flexiblen Blende (E,20), bei der einer der Ränder der Blende an Fixpunkten (5) befestigt ist und der gegenüberliegende Rand mit Hilfe mindestens eines Motors in eine Hauptrichtung gezogen wird, die gegeben ist durch mehrere Tragelemente (4) der Blende in Form von Schienen mit Profilquerschnitt, von denen jede die lokale Leitlinie der geometrischen Regelfläche definiert, die von der Blende eingenommen werden kann, definiert, dadurch gekennzeichnet, daß mindestens zwei Tragelemente (4), die je mindestens eine Schiene mit konstantem regelmäßigem Profilquerschnitt bilden, jeweils ein Stützorgan darstellen und mit jeder der Antriebskatzen (6), an die einer der Ränder von ein und derselben Blende (E,20) befestigt ist, zu deren Führung zusammenwirken, diese Antriebskatzen (6), von denen jeweils eine je Schiene jedes der Tragelemente (4) montiert ist, umschaltbar sind und jeweils ein Organ für die Bewegungsübertragung, das mit der Schiene, die sie trägt, zusammenwirkt, sowie Mittel zum Feststellen auf dieser Schiene umfassen und betriebsmäßig voneinander unabhängig sind, wobei die Tragelemente (4) zusätzlich als Stütze für die Blende(n) (E,20) dienen.

2. Vorrichtung nach Anspruch 1, dadurch gekennzeichnet, daß jedes Tragelement (4) zwei Stützschienen aufweist, die mit zwei Antriebskatzen (6) zu deren Führung zusammenwirken, welche zwei getrennten flexiblen Blenden entsprechen, die eine Stellung mit wenigstens teilweiser Überlappung einnehmen.

3. Vorrichtung nach Anspruch 1 oder 2, dadurch gekennzeichnet, daß die Schienen (4) so gestaltet sind, daß sie eine in der Form geometrische Fläche definieren.

4. Vorrichtung nach Anspruch 1, dadurch gekennzeichnet, daß jede Antriebskatze (6) wenigstens einen Flansch (10) aufweist, der einen elektrischen Motor (8) und eine Übertragungsvorrichtung (9) trägt, die aus einem Satz von wenigstens drei Rollen (16) zusammengesetzt ist, welche im Dreieck in einer Ebene angeordnet sind und von denen wenigstens eine treibend ist und die beiden anderen eine zu ihr entgegengesetzte Drehrichtung haben, und die mit ihrem Umfang einen Durchlaufquerschnitt (18) bilden, der in einer geraden, zu ihrer gemeinsamen Ebene rechtwinkligen Ebene von komplementärem und allenfalls gleichem Querschnitt wie eine Schiene (4) ist.

5. Vorrichtung nach Anspruch 4, dadurch gekennzeichnet, daß jede Katze einen Satz Rollen (16) aufweist, von denen jede ein zentrales Hauptteil hat, das in der Ebene der Stirnflächen von zwei nach außen herausragenden Umfangsrändern (17), welche die Schiene zum Teil übergreifen, begrenzt ist.

6. Vorrichtung nach Anspruch 4 oder 5, dadurch gekennzeichnet, daß jede Katze (6) einen Satz Rollen (16) aufweist, der wenigstens eine treibende Rolle (16c umfaßt, die mit den getriebenen Rollen (16a-16b über die nach außen herausragenden Umfangsränder in antriebsmäßiger Beziehung steht.

7. Vorrichtung nach einem der Ansprüche 4 bis 6, dadurch gekennzeichnet, daß die Rollen (16) einen Außenumfang aufweisen, der in bezug auf die Schiene einen erhöhten Reibungskoeffizienten hat.

8. Vorrichtung nach einem der Ansprüche 4 bis 7, dadurch gekennzeichnet, daß die wenigstens eine Rolle (16) auf ihrem Außenumfang eine Bandage (19) aus verformbarem Werkstoff aufweist.

9. Vorrichtung nach Anspruch 1, dadurch gekennzeichnet, daß sie Zwischenelemente (4a) aufweist, die zwischen den Tragelementen angeordnet und nach ihnen ausgerichtet sind, um die in Stellung gebrachte oder verstellte Blende abzustützen.

10. Anwendung der Vorrichtung gemäß einem der Ansprüche 1 bis 9 zum Zu- und Aufziehen wenigstens einer Blende im Innern eines tunnelförmigen Gewächshauses.

**Claims**

1. Device for putting in position, retracting or shifting at least one flexible screen (E,20) of the type in which one of the edges of the said screen is attached to fixed points (5) and the opposite edge is pulled, by means of at least one motor, in a general direction determined by a plurality of carrier elements (4) for the screen which are in the form of rails of profiled cross-section, each defining the local directrix of the set geometrical surface capable of being occupied by the screen, characterized in that at least two carrier elements (4), each forming at least one rail of constant regular profiled cross-section, each constitute a member for support, interaction and guidance of movement along the directrix which they define for each of the motor trolleys (6), to which one of the edges of one and the same screen (E,20) is fastened, and these motor trolleys (6), mounted at the rate of one for each rail of each of the said carrier elements (4), are reversible in operation, each have a movement transmission member interacting with the rail carrying them and means of immobilizing them on this rail, and operate independently of one another, the carrier elements (4) also serving as a support for the screen or screens (E,20).

2. Device according to Claim 1, characterized in that each carrier element (4) comprises two rails for the support, interaction and guidance of two motor trolleys (6) corresponding to two independent flexible screens put in place so as to overlap at least partially.

3. Device according to Claim 1 or 2, characterized in that the rails (4) are formed so as to define a shaped geometrical surface.

4. Device according to Claim 1, characterized in that each motor trolley (6) comprises at least one flange (10) carrying an electric motor (8) and a transmission assembly (9) composed of a set of at least three rollers (16) which are arranged in a triangle in one plane and of which at least one is a driving roller and the other two rotate counter to the latter, and which by means of their periphery delimit a passage section (18) presenting, in a straight plane perpendicular to their common plane, a cross-section matching and at most equal to that of the rail (4).

5. Device according to Claim 4, characterized in that each trolley has a set of rollers (16), each forming a central body edged, in the plane of the transverse faces, with two peripheral rims (17) partially fitting on the rail.

6. Device according to Claim 4 or 5, characterized in that each trolley (6) has a set of rollers (16) comprising at least one driving roller (16c) which, by means of the peripheral rims, is associated with the driven rollers (16a-16b) so as to drive them in rotation.

7. Device according to one of Claims 4 to 6, characterized in that the rollers (16) possess a periphery having a coefficient of friction which is high in relation to the rail.

8. Device according to one of Claims 4 to 7,

**0 124 456**

characterized in that at least one of the rollers (16) has a covering (19) made of deformable material on its periphery.

9. Device according to Claim 1, characterized in that it has intermediate elements (4a) arranged in alignment with the carrier elements for supporting the screen put in position or shifted.

10. Use of the device according to one of Claims 1 to 9 for extending and retracting at least one screen inside a tunnel greenhouse.

6

4

_Fig-8_

21

20

22

2

6

61

20

3

4

201

$4_1$

4

$4a_1$

4a

1

_Fig-1_

0 124 456

1/4

Fig-6    Fig-7    Fig-2

0 124 456

# Fig-3

# Fig-4

Fig-5

0 124 456

4/4